# EUROPÄISCHE PATENTANMELDUNG

(11) **EP 2 305 452 A1**
(43) Veröffentlichungstag der Anmeldung: **06.04.2011**
(21) Anmeldenummer: 09012513.9
(22) Anmeldetag: 02.10.2009
(51) Int. Cl.: B29C 65/20, B29C 65/50

(54) **Verfahren zum Fügen von beschichteten Textilien, Fügestelle und Verwendung einer Vorrichtung zur Durchführung des Verfahrens**

(71) Anmelder: Kirson Industrial Reinforcements GmbH, 93333 Neustadt/Donau (DE)
(72) Erfinder: Schitz, Viktor, 93339 Riedenburg (DE)
(74) Vertreter: Seifert, Thomas

(57) **Zusammenfassung**

Ein Verfahren zum Fügen von beschichteten Textilien, eine Fügestelle und die Verwendung einer Vorrichtung zur Durchführung des Verfahrens werden angegeben, die bekannte Fügetechniken zur Verbindung von beschichteten Textilien verbessern, sowohl hinsichtlich der Qualität der Fügestelle als auch hinsichtlich der Möglichkeit des Verbleibs der Fügestelle im verwendeten Endprodukt.

Gemäß der Erfindung wird in einem Verfahren zum Verkleben von beschichteten Textilien bzw. Textilbahnen mit Druck und Temperatur die zweite Textillage mit der ersten Textillage nach einer gewissen Pressdauer zusammengefügt.

## Beschreibung

Die Erfindung betrifft ein Verfahren zum Fügen von beschichteten Textilien, eine Fügestelle und die Verwendung einer Vorrichtung zur Durchführung des Verfahrens.

Unter beschichteten Textilien bzw. Textilbahnen sind jegliche beschichtete Gelege, Gewebe, Gewirke, Vliese und Tücher sowie Folien und Verbunde daraus zu verstehen, insbesondere bei Verwendung von Multifilamentgarnen aus Kunststofffilamenten, wie Kunststoffe aus Polyester oder Polyamid, sowie Multifilamentgarnen aus Glas- und Basaltfilamenten, aber auch Flachs, Zellwolle und Mischgewebe oder dergleichen.

Unter Beschichtung und Bindemittel sind jegliche Polymerwerkstoffe auf Basis von wässrigen Dispersionen, Polyvinylchlorid (PVC) Plastisolen und echten Lösungen, wie Polymere auf Basis von Acrylat, Ethyhlenvinylacetet, Polyvinylacetat, Butadien Styrol, Polyurethane, Polyvinylchlorid und die daraus entstandenen Binderfilme zu verstehen.

Beschichtete Gelege werden beispielsweise zu Endprodukten, wie Dachbahnen, Bodenbeläge, Verbundfolien usw., weiterverarbeitet, indem die Gelege mit den weiteren Bestandteilen der Endprodukte verbunden werden. Die Gelege werden dabei üblicherweise in Form von Gelegebahnen verarbeitet. Dadurch wird es erforderlich, zwei Gelegebahnen miteinander zu verbinden, wobei an der Fügestelle bisher veränderte Materialeigenschaften der Gelege, wie Dicke, Reißfestigkeit oder Materialbestandteile, auftreten. Ein Verbleib der Fügestelle im Endprodukt, z. B. Dachbahn, Bodenbeläge, Verbundfolien und dergleichen, ist nicht möglich, da diese keine Verbindung der Einzelfolien zueinander im Endprodukt zulassen und als Fremdkörper im Endprodukt unerwünscht sind und des weiteren aufgrund der Dicke eine Erhebung im Enprodukt aufweisen und sich optisch stärker als verändertes Relief abzeichnen.

Zur dauerhaften Verbindung von Textilien sind in der DE 103 53 916 A1 einige Verfahren beschrieben, beispielsweise Verbindung durch Nähen, aber auch durch Kleben unter Einlage von Klebebändern und darauf folgendes Erhitzen, durch Hochfrequenzschweißen bzw. - kleben, durch Heißluftkleben und -schweißen bzw. durch Ultraschall. Die DE 10353916 A1 betrifft Verfahren und Vorrichtung zum Verkleben von Textilien mittels Heißkleber, wobei mindestens eine der zu verklebenden Textilien vorgeheizt wird und der Heißkleber anschließend in fließfähiger Form auf zumindest eine der zu verklebenden Textilien aufgebracht wird.

Die EP 1956063 A2 beschreibt ein Verfahren zum Verkleben eines ersten Bauteils mit einem zweiten Bauteil, das einen Randbereich aufweist, mit dem überlappend das erste Bauteil verklebt wird, wobei man
a) mindestens einen Körper aus einem Schmelzklebstoff so mit dem ersten Bauteil verklebt, dass er beim Verkleben des ersten Bauteils mit dem zweiten Bauteil in Kontakt mit dem Randbereich kommt,
b) den Randbereich lokal an mindestens einer Stelle, an der beim Verkleben des ersten Bauteils der aufgebrachte Körper aus Schmelzklebstoff in Kontakt mit dem Randbereich kommt, mittelbar oder unmittelbar durch elektromagnetische Induktion auf eine Temperatur erwärmt, die oberhalb der Schmelztemperatur des Schmelzklebstoffs liegt,
c) das erste Bauteil so mit dem Randbereich des zweiten Bauteils kontaktiert, dass der Körper des Schmelzklebstoffs in Kontakt mit der im Schritt b) erwärmten Stelle des Randbereichs kommt, so dass der Schmelzklebstoff an der Kontaktstelle mit dem Randbereich aufschmilzt und nach Abkühlen das erste Bauteil mit dem Randbereich des zweiten Bauteils verbindet,
d) wobei man zusätzlich vor dem Schritt b) oder nach dem Schritt c) einen reaktiven Klebstoff so zwischen das erste und das zweite Bauteil einbringt, dass er das erste Bauteil mit dem Randbereich des zweiten Bauteils verbindet, und e) den reaktiven Klebstoff aushärtet oder aushärten lässt.

DE 7025655 U offenbart einen Verbund aus mindestens zwei biegsamen Bahnen aus mit Kunststoff beschichteten Textilgebilden.

DE 6941387 U betrifft eine Verklebungspresse zum Verkleben textiler Flächengebilde mittels Wärme und Druck, wobei die miteinander zu verklebenden textilen Flächengebilde, von denen ein Teil einseitig mit Klebstoff beschichtet ist, zwischen je einzeln oder gemeinsam aufeinander zu-bewegbaren Pressplatten einer Verklebungspresse mit mehreren Pressstationen, von denen wenigstens eine beheizt ist, gebracht werden.

Die Aufgabe der vorliegenden Erfindung ist es, die im Stand der Technik bekannten Fügetechniken zur Verbindung von beschichteten Textilien zu verbessern, sowohl hinsichtlich der Qualität der Fügestelle als auch hinsichtlich der Möglichkeit des Verbleibs der Fügestelle im verwendeten Endprodukt, und ein entsprechendes Verfahren, eine Fügestelle sowie die Verwendung einer Vorrichtung anzugeben.

Gelöst wird diese Aufgabe mit den Merkmalen der unabhängigen Ansprüche. Vorteilhafte Ausgestaltungen der Erfindung ergeben sich aus den Unteransprüchen.

Gemäß der Erfindung wird in einem Verfahren zum Verkleben von beschichteten Textilien bzw. Textilbahnen mit Druck und Temperatur die zweite Textillage mit der ersten Textillage nach einer gewissen Pressdauer zusammengefügt. Dabei umfasst das erfindungsgemäße Verfahren die folgenden Schritte:
a) Übereinanderlegen der zu fügenden Textilien;
b) Niederhalten der beiden Textilien;
c) Aufdrücken von zwei Schweißbalken von oben und unten gegen die übereinanderliegenden Textilien, wobei Temperatur, Druck und Pressdauer so gewählt sind, dass einerseits die Beschichtung des Textils in einen thermoplastisch verformbaren Zustand überführt wird und andererseits das Textil selbst nicht schrumpft; und
d) Entfernen der Schweißbalken.

Durch das Entfernen der Schweißbalken in Schritt d) erstarrt die Beschichtung wegen der Druckreduzierung in dem Maße, dass die Fügestelle ohne weitere Abkühlung aus der Heizpresszone gefahren und beispielsweise aufgerollt werden kann.

Die erfindungsgemäße Fügestelle der beiden beschichteten Textilien kann im Folienverbund des Endprodukts (z.B. Dachbahn, Bodenbelag oder Verbundfolie) verbleiben, weist mindestens die Festigkeit im Schwankungsbereich des Textils (z.B. Geleges) auf und ist dabei dünner oder gleich Dick wie das Textil (z.B. Gelege) selbst. Die Fügestelle ist kostengünstiger herstellbar als eine vergleichbare Fügestelle mit Klebeband und besteht nur aus den Materialien des beschichteten Textils (z.B. Gelege). Bei der Weiterverarbeitung zu einem Endprodukt (z.B. Dachbahn) übersteht die Fügestelle einen Verarbeitungsprozess von mindestens 160 °C.

Zur Durchführung des erfindungsgemäßen Verfahrens ist die Verwendung einer bekannten Vorrichtung mit einer integrierten Schweißvorrichtung zum Herstellen von Klebestellen mit Einlage von Schweißklebebändern, insbesondere die Verwendung einer Warenschaumaschine möglich. Durch diese Verwendung sind keine Maschinenneuinvestitionen für die Erfindung notwendig.

In einer Variante des Verfahrens kann die Fügestelle mit dem Endproduktmaterial hergestellt werden, in dem vor dem Pressen zwischen den beiden Textillagen das Endproduktmaterial, z.B. Folie eingelegt wird. Die Fügestelle besteht nach dieser Variante nur aus den Materialien des beschichteten Textils (z.B. Gelege) und dem Material des Endprodukts.

Die zu fügenden Textilien können Gelege, Gewebe, Gewirke, Vliese oder Tücher sowie Folien oder Verbunde daraus sein, wobei sie aus Multifilamentgarnen bestehen können.

Die Multifilamentgarne können aus Kunststofffilamenten, vorzugsweise aus Polyester, beispielsweise Polyethylenterephthalat (PET) oder Polyethylennaphthalat (PEN), oder Polyamid (PA), oder aus Glas- oder Basaltfilamenten, Flachs, Zellwolle oder Mischkonstruktionen daraus bestehen.

Die Beschichtung der Textilien kann aus Polymerwerkstoffen auf Basis von wässrigen Dispersionen, Polyvinylchlorid (PVC) Plastisolen oder echten Lösungen, wie Polymere auf Basis von Acrylat, Ethyhlenvinylacetet, Polyvinylacetat, Butadien Styrol, Polyurethane, Polyvinylchlorid oder den daraus entstandenen Binderfilmen bestehen.

Bei einem Ausführungsbeispiel wurden zwei mit PVC Plastisol beschichtete Polyestergelege bei einer Temperatur von 175 °C, einem Pressdruck von 5,5 bar und einer Pressdauer von 30 Sekunden gefügt. Dabei wurde eine Variante 1, bei der die Textillagen unmittelbar übereinander gelegt wurden, und eine Variante 2, bei der zwischen die Textillagen eine Folie eingelegt wurde, hergestellt. Versuchsläufe auf einer Warenschaumaschine mit einer integrierten Schweißvorrichtung zum Herstellen von Klebestellen mit Einlage von Schweißklebebändern haben ausgezeichnete Ergebnisse ergeben, so konnten herausragende Verbindungen zwischen beschichteten Textillagen selbst und in Verbindung mit Folienmaterial erzielt werden.

Bei einem weiteren Test wurde die Textilbahn mit der Fügestelle über mehrere 170 -180 °C heiße Heizwalzen geführt. Dabei hat sich die Beständigkeit dieser Fügestelle gegenüber hohen Temperaturen unter Einwirken von Zugspannung ergeben. Die Fügenaht bleibt auch bei hohen Temperaturen stabil.

Auf der oben erwähnten Warenschaumaschine wurden Gelege aus Polyester- und Glasfilamentgarn sowie Verbunde bestehend aus Gelege und Vlies zusammengefügt. Die Fügestellen wurden einer Prüfung auf Reißkraft bis zum Bruch und Bruchdehnung in Schuss- und Kettrichtung unterzogen und mit dem gleichen Textil nur ohne Fügestelle verglichen. Anschließend wurde die Dickenänderung geprüft. Die Ergebnisse werden in nachfolgender Tabelle dargestellt, aus welcher die Überlegenheit der mittels des erfindungsgemäßen Verfahrens erhaltenen Fügestellen gegenüber herkömmlichen Ausführungen deutlich hervorgeht.

| Variante | | Reißkraft Kette in N/5cm | Bruchdehnung Kette in % | Reißkraft Fügestelle in N/5cm | Bruchdehnung Fügestelle in % | Dicke Textil in mm | Dicke Fügestelle in mm |
|---|---|---|---|---|---|---|---|
| 1 | Polyestergelege mit PVC Plastisol beschichtet | 943 | 19,5 | 917 (Textil reißt, Fügestelle bleibt ganz) | 19,3 | 0,285 | 0,255 |
| 2 | Polyestergelege mit PVC Plastisol beschichtet | 918 | 19,5 | 918 (Textil reißt, Fügestelle mit Folie bleibt ganz) | 19,0 | 0,285 | 0,400 |

Anhand der Zeichnung ist die Erfindung näher erläutert. Es zeigen:
Fig. 1 bis 3 eine Vorrichtung mit einer integrierten Schweißvorrichtung bei verschiedenen Schritten des Verfahrens zur Herstellung einer Fügestelle,
Fig. 4 bis 6 die Vorrichtung bei verschiedenen Schritten des Verfahrens zur Herstellung einer Fügestelle gemäß der Variante mit eingelegtem Endproduktmaterial,
Fig. 7 und 8 Fügestellen.

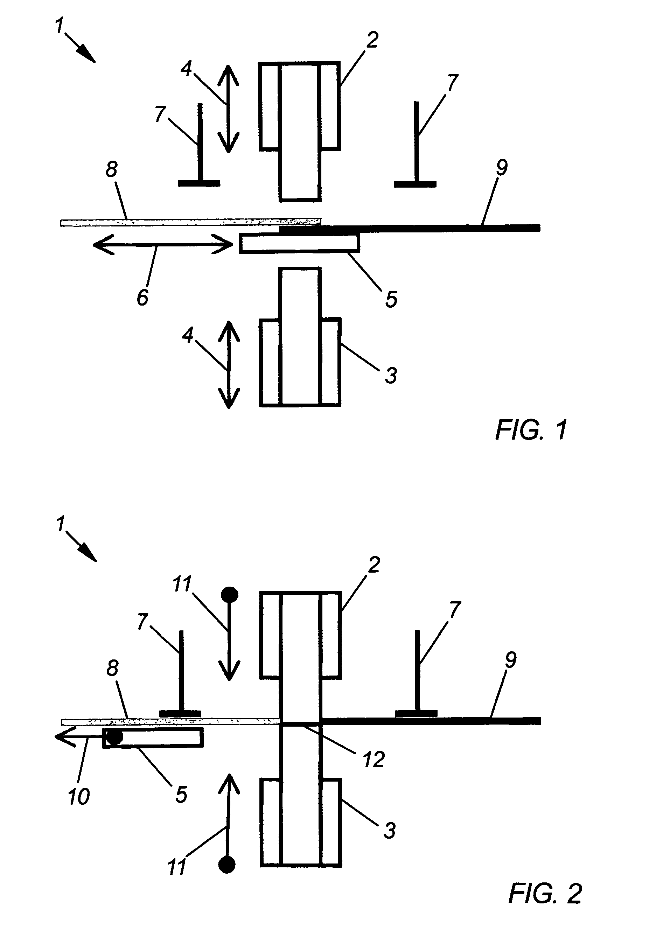

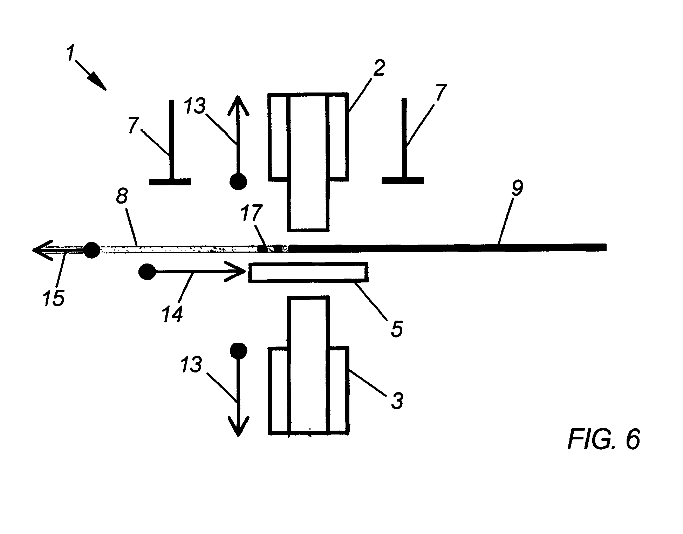

Bei der in den Fig. 1 bis 6 schematisch dargestellten Vorrichtung 1 mit einer integrierten Schweißvorrichtung kann es sich beispielsweise um eine Warenschaumaschine handeln.

Die Vorrichtung 1 umfasst einen oberen beheizten Schweißbalken 2 und einen unteren beheizten Schweißbalken 3, die in Richtung des Doppelpfeiles 4 bewegbar sind und zur Pressung aufeinander gedrückt werden können. Daneben ist ein Trennschieber 5 vorgesehen, der zum Auflegen des Textils und zum Fernhalten von den Schweißbalken dient und in Richtung des Doppelpfeiles 6 bewegbar ist. Außerdem sind Niederhalter 7 vorgesehen, durch die gewährleistet wird, dass sich die Textillagen während der Vorbereitung der Fügestelle und während des Fügevorgangs nicht verschieben.

Bei der Durchführung des Verfahrens gemäß den Fig. 1 bis 3 werden zunächst die zu fügenden beschichteten Textilien 8, 9 auf dem Trennschieber 5, der sich zwischen den Schweißbalken 2, 3 befindet, übereinandergelegt, wie dies in der Fig. 1 dargestellt ist.

Anschließend werden die Textilien 8, 9 mit den Niederhaltern 7 fixiert, so dass sich die Textilien 8, 9 während der Vorbereitung der Fügestelle und während des Fügevorgangs nicht verschieben. Dies gewährleistet eine kantengerade Fügestelle.

Nun wird der Trennschieber in Richtung des in Fig. 2 dargestellten Pfeiles 10 bewegt. Die Schweißbalken 2, 3 werden in Richtung des Pfeiles 11 der Fig. 2 aufeinander zu bewegt und drücken die Textilien 8, 9 aufeinander.

Wichtig ist, dass die Temperaturen der Schweißbalken 2, 3 so gewählt werden, dass die Beschichtung der Textilien 8, 9 unter Druck in einen thermoplastisch verformbaren Zustand überführt wird und dabei die Temperatur maximal so hoch ist, dass die Kunststofffilamente der Textilien 8, 9 nicht schrumpfen und dabei das Textil verziehen oder die Breite des Textils reduzieren. Die Temperatur ist zuvor mit der Koflerbank bestimmt worden.

In einem Ausführungsbeispiel mit PVC Plastisol als Beschichtung, liegt die Temperatur bei 175 ° C bei beiden Schweißbalken 2, 3. Die Dauer der Temperatur- und gleichzeitiger Druckeinwirkung sorgt dafür, dass die Beschichtung heiß verformbar beim Zusammenfügen der Textilien eine dauerhafte Verbindung gewährleistet. Der eingestellte Pressdruck im Ausführungsbeispiel ist 5,5 bar und die Pressdauer beträgt dreißig Sekunden.

Durch den ausgeübten Druck auf die Fügestelle 12 werden die Filamente im Garn der Textilien 8, 9 vereinzelt und die Fügeoberfläche vergrößert, was zu einer intensiveren Bindung und höheren Zugfestigkeit als die des Textils selbst führt. Dadurch wird die Dicke des Textils bei der Fügestelle 12 trotz Überlappung der Textilien 8, 9 beim Fügen niedriger, zumindest nicht dicker als die Textileinzellage. Weiterhin wird dadurch das Eindringen der Beschichtung zwischen den einzelnen Filamenten erleichtert.

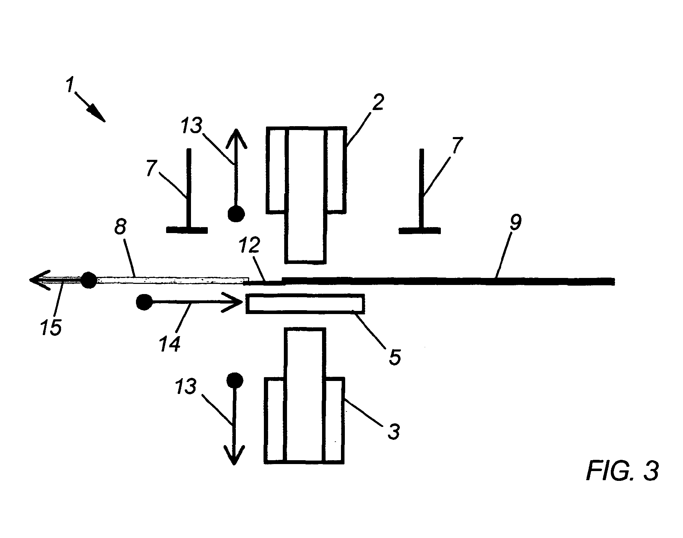

Bei dem in Fig. 3 dargestellten Entfernen der Schweißbalken 2, 3 in Richtung des Pfeils 13 erstarrt die Beschichtung durch die Druckreduzierung in dem Maße, dass ohne weitere Abkühlung, die Fügestelle 12 aus der Heizpressenzone gefahren und das Textilgut weiter aufgerollt werden kann. Dafür wird der Trennschieber 5 in Richtung des Pfeils 14 zwischen die Schweißbalken 2, 3 und die Fügestelle 12 bewegt und die gefügten Textilien 8, 9 in Richtung des Pfeiles 15 transportiert.

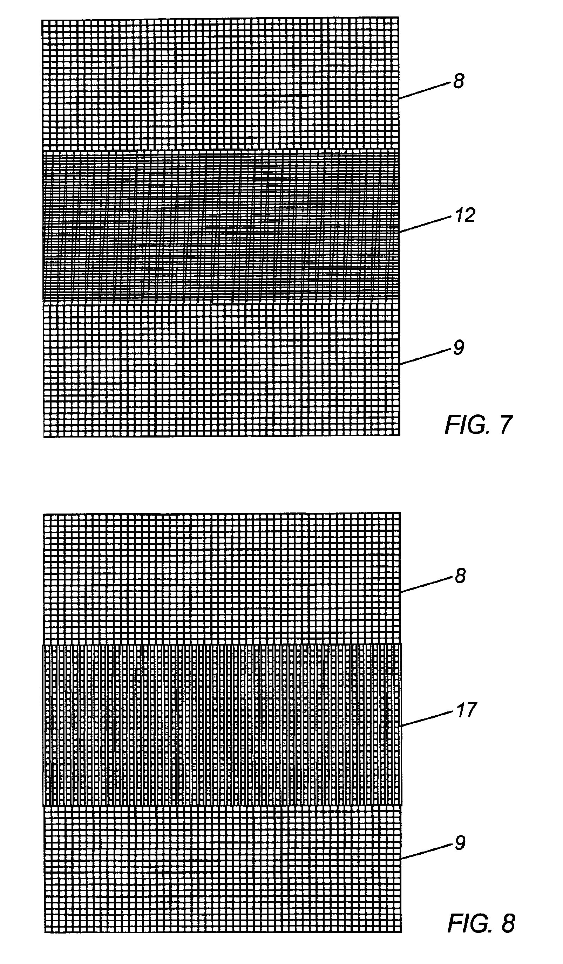

Eine Ansicht einer Fügestelle 12 der Textilien 8, 9 ist in Fig. 7 dargestellt.

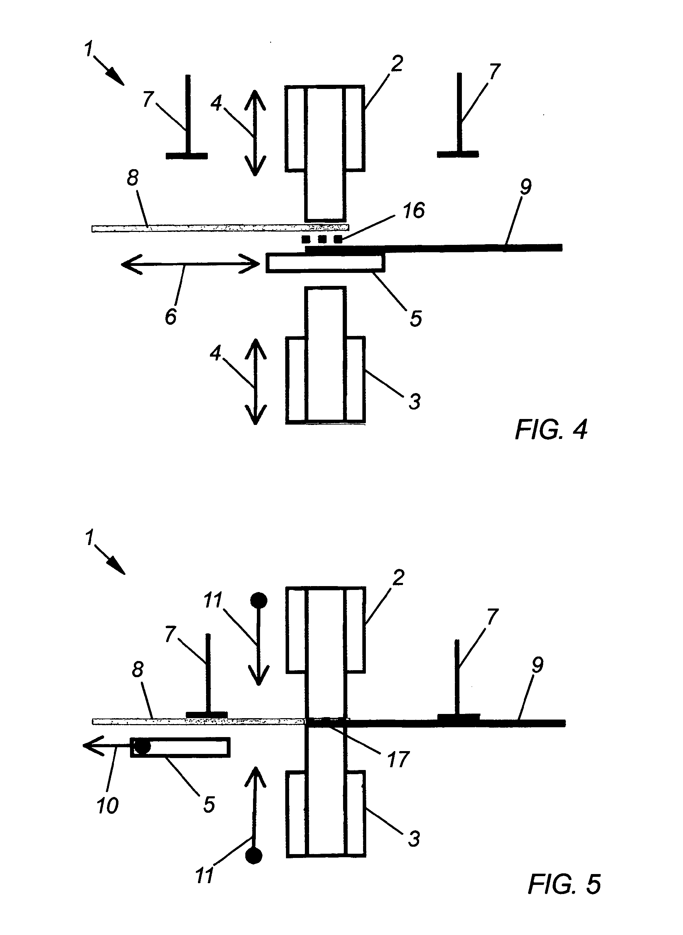

Das in den Fig. 4 bis 6 dargestellte Verfahren zur Herstellung einer Fügestelle 12 gemäß der Variante mit eingelegtem Endproduktmaterial umfasst im wesentlichen die gleichen Schritte wie zuvor erläutert. Es wird daher auf die Ausführungen zu den Fig. 1 bis 3 Bezug genommen.

Wie in der Fig. 4 dargestellt, wird beim Übereinanderlegen der Textilien 8, 9 zwischen die Textilien das Endproduktmaterial 16, z.B. Folie, eingelegt. Der Pressvorgang ist derselbe, wie zu den Fig. 1 bis 3 erläutert. Die erhaltene Fügestelle 17 ist dicker als die Fügestelle 12, aber im Schwankungsbereich der Dicke der Textileinzellage 8, 9 und deutlich dünner als die

Gesamtdicke des Endproduktes, z.B. Dachbahn.

Eine Ansicht einer Fügestelle 17 der Textilien 8, 9 ist in Fig. 8 dargestellt.

### Bezugszeichenliste

- 1: Vorrichtung
- 2: oberer beheizter Schweißbalken
- 3: unterer beheizter Schweißbalken
- 4: Doppelpfeil
- 5: Trennschieber
- 6: Doppelpfeil
- 7: Niederhalter
- 8: beschichtetes Textil
- 9: beschichtetes Textil
- 10: Pfeil
- 11: Pfeil
- 12: Fügestelle
- 13: Pfeil
- 14: Pfeil
- 15: Pfeil
- 16: Endproduktmaterial
- 17: Fügestelle

## Patentansprüche

1. Verfahren zum Fügen von beschichteten Textilien (8, 9) umfassend die Schritte:
a) Übereinanderlegen der zu fügenden Textilien (8, 9);
b) Niederhalten der beiden Textilien (8, 9);
c) Aufdrücken von zwei Schweißbalken (2, 3) von oben und unten gegen die übereinanderliegenden Textilien (8, 9), wobei Temperatur, Druck und Pressdauer so gewählt sind, dass einerseits die Beschichtung des Textils (8, 9) in einen thermoplastisch verformbaren Zustand überführt wird und andererseits das Textil (8, 9) selbst nicht schrumpft; und
d) Entfernen der Schweißbalken (2, 3).

2. Verfahren nach Anspruch 1, **dadurch gekennzeichnet, dass** vor dem Pressen zwischen den beiden Textillagen (8, 9) ein Endproduktmaterial (16), z.B. Folie eingelegt wird.

3. Verfahren nach einem der vorhergehenden Ansprüche, **dadurch gekennzeichnet, dass** die Fügestelle (12, 17) im Anschluss an Schritt d) ohne weitere Abkühlung aus der Heizpressenzone gefahren und das gefügte Textil aufgerollt wird.

4. Fügestelle (12, 17) von beschichteten Textilien (8, 9), hergestellt mit einem Verfahren nach einem der vorhergehenden Ansprüche.

5. Verfahren oder Fügestelle (12, 17) nach einem der vorhergehenden Ansprüche, **dadurch gekennzeichnet, dass** die Textilien (8, 9) Gelege, Gewebe, Gewirke, Vliese oder Tücher sowie Folien oder Verbunde daraus sind.

6. Verfahren oder Fügestelle (12, 17) nach einem der vorhergehenden Ansprüche, **dadurch gekennzeichnet, dass** die Textilien (8, 9) aus Multifilamentgarnen bestehen.

7. Verfahren oder Fügestelle (12, 17) nach Anspruch 6, **dadurch gekennzeichnet, dass** die Multifilamentgarne aus Kunststofffilamenten, vorzugsweise aus Polyester oder Polyamid, bestehen.

8. Verfahren oder Fügestelle (12, 17) nach Anspruch 6, **dadurch gekennzeichnet, dass** die Multifilamentgarne aus Glas- oder Basaltfilamenten, Flachs, Zellwolle oder Mischkonstruktionen daraus bestehen.

9. Verfahren oder Fügestelle (12, 17) nach einem der vorhergehenden Ansprüche, **dadurch gekennzeichnet, dass** die Beschichtung der Textilien (8, 9) aus Polymerwerkstoffen auf Basis von wässrigen Dispersionen, Polyvinylchlorid (PVC) Plastisolen oder echten Lösungen, wie Polymere auf Basis von Acrylat, Ethyhlenvinylacetet, Polyvinylacetat, Butadien Styrol, Polyurethane, Polyvinylchlorid oder den daraus entstandenen Binderfilmen besteht.

10. Verwendung einer Vorrichtung (1) mit einer integrierten Schweißvorrichtung zur Durchführung des Verfahrens nach einem der Ansprüche 1 bis 3 oder 5 bis 9.

11. Verwendung einer Vorrichtung (1) nach Anspruch 10, **dadurch gekennzeichnet, dass** die Vorrichtung eine Warenschaumaschine ist.

12. Endprodukt, insbesondere Dachbahn, Bodenbelag oder Verbundfolie, umfassend eine Fügestelle (12, 17) nach einem der Ansprüche 4 bis 9.
